# NEUE EUROPÄISCHE PATENTSCHRIFT

(11) **EP 2 210 317 B2**
(45) Veröffentlichungstag und Bekanntmachung des Hinweises auf die Entscheidung über den Einspruch: **25.03.2020**
(45) Hinweis auf die Patenterteilung: 02.05.2012
(21) Anmeldenummer: 08847035.6
(22) Anmeldetag: 07.11.2008
(51) Int. Cl.: H01R 43/02

(54) **VERFAHREN ZUM REDUZIEREN DES ANLEGIERENS VON ALUMINIUM SOWIE ULTRASCHALLSCHWEISSVORRICHTUNG**
PROCESS FOR REDUCING ALUMINIUM PICK-UP, AND ULTRASONIC WELDING DEVICE
PROCÉDÉ POUR RÉDUIRE L'APTITUDE DE L'ALUMINIUM À S'ALLIER ET DISPOSITIF DE SOUDAGE PAR ULTRASONS

(30) Priorität: 09.11.2007 DE 102007053913
(43) Veröffentlichungstag der Anmeldung: 28.07.2010
(73) Patentinhaber: Schunk Sonosystems GmbH, 35435 Wettenberg (DE)
(72) Erfinder: STEINER, Ernst, 35452 Heuchelheim (DE)
(74) Vertreter: Stoffregen, Hans-Herbert
(86) Internationale Anmeldenummer: PCT/EP2008/065162
(87) Internationale Veröffentlichungsnummer: WO 2009/060080

(56) Entgegenhaltungen:
- EP-A1- 0 032 437
- WO-A-02/43915
- WO-A-89/01384
- DE-U1-202004 010 775
- Roeder, E.: "Ultraschallschweissen von Aluminiumlitzen", Schweissen und Schneiden, vol. 59, no. 10, 2007, pages 550-554,

## Beschreibung

Die Erfindung bezieht sich auf ein Verfahren zum Reduzieren des Anlegierens und/oder Anhaftens von Aluminium oder Aluminiumlegierung beim Ultraschallverschweißen von aus Aluminium oder Aluminiumlegierung bestehenden Adern bzw. Einzeldrähten aufweisenden Litzen zu einem End- oder Durchgangsknoten untereinander oder mit einem aus Metall bestehenden Träger, wobei zumindest die Litzen in einen in Höhe und/oder Breite verstellbaren Verdichtungsraum eingebracht werden, der in gegenüberliegenden ersten Begrenzungsflächen von Abschnitten einer Sonotrode und eines Ambosses oder dem auf dem Amboss angeordneten Träger und in verbleibenden gegenüberliegenden zweiten Begrenzungsflächen von statisch wirkenden Werkzeugteilen begrenzt wird.

Ferner bezieht sich die Erfindung auf eine Ultraschallschweißvorrichtung, umfassend eine Ultraschallschwingungen übertragende Sonotrode mit einem eine Schweißfläche aufweisenden Sonotrodenkopf, eine der Schweißfläche gegenüberliegende Gegenelektrode sowie seitliche Begrenzungselemente, wobei die Schweißfläche, die Begrenzungselemente sowie mittelbar oder unmittelbar die Gegenelektrode einen in Höhe und/oder Breite veränderbaren Verdichtungsraum begrenzen.

Werden mittels Ultraschall Litzen, die aus Einzeldrähten bzw. Adern aus Aluminium oder Aluminiummaterial bestehen, untereinander oder mit einem massiven Träger verschweißt, so zeigt sich der Nachteil, dass die eingeleitete Schweißenergie dazu führt, dass das Aluminium zu fließen beginnt bzw. in eine so genannte teigige Phase übergeht, so dass ein Anlegieren bzw. ein Anhaften an den Seitenbegrenzungen des die Litzen aufnehmenden Verdichtungsraums erfolgt.

Um dieses Anlegieren bzw. Anhaften zu vermeiden, ist es bereits bekannt, zwischen den Werkzeugen des Verdichtungsraums der Ultraschallschweißvorrichtung und den aus Aluminium bestehenden Litzen Zwischenfolien anzuordnen, die verhindern, dass ein unmittelbarer Kontakt mit den Schweißwerkzeugen erfolgt. Diesbezügliche Maßnahmen sind aufwendig und ermöglichen dem Grunde nach keinen vollautomatischen Schweißablauf bzw. Schweißvorgänge schneller Taktfolge.

Um nach der US-A-3,717,842 Aluminiumdrähte mit einem U-förmigen Träger zu verschweißen, wird zunächst der Träger in bekannter Weise um den Aluminiumdraht gecrimpt, um sodann den Schweißvorgang einzuleiten. Hierbei befindet sich zwischen der Sonotrode und den Drähten der ungecrimpte Abschnitt des Trägers, so dass gleichfalls kein unmittelbarer Kontakt zwischen den Werkzeugen und den Aluminiumdrähten erfolgt.

Sowohl das Einbringen einer Zwischenfolie als auch das zusätzliche Crimpen stellen verfahrenstechnische Nachteile dar, die insbesondere bei hochautomatisierten Schweißabläufen unerwünscht sind.

Von der Universität Kaiserslautern wurden Untersuchungen zur Vermeidung bzw. Reduzierung des Anhaftens von Aluminium und Aluminiumlegierungen an Sonotroden beim Ultraschallschweißen durchgeführt (AIF-Vorhaben-Nr. 13.285 N/1). Dabei wurde ausschließlich die Sonotrodenkopffläche mittels Magnetron-Sputter-Verfahrens beschichtet. Als Materialen wurden TiN und TiAlN benutzt. Durch das Auftragsverfahren war die Schichtdicke einige µm dick. Als Ergebnis konnte festgestellt werden, dass das Anlegieren von Aluminium beim Verschweißen dieses verringert wurde, allerdings nur während der ersten Schweißungen. So haben Versuche gezeigt, dass bereits nach 100 Schweißungen das unerwünschte Anlegieren wieder auftrat. Ursächlich hierfür dürfte sein, dass aufgrund der geringen Dicke der Titan enthaltenden Nitridschichten Aluminium durch die Schicht hindurch diffundiert, so dass sodann das Anlegieren erfolgen konnte.

Der vorliegenden Erfindung liegt die Aufgabe zu Grunde, ein Verfahren zuvor beschriebener Art so weiter zu bilden, dass aus Aluminium bestehende oder Aluminium enthaltende Litzen untereinander oder mit einem massiven Träger verschweißt werden können, ohne dass Zwischenfolien erforderlich sind oder dass ein Massivteil um die Litzen gecrimpt werden muss. Auch soll die Anzahl von Schweißungen der üblicher Schweißprozesse entsprechen, bei denen Aluminium-Materialien nicht verschweißt werden, ohne dass ein Anlegieren bzw. Anhaften an die Begrenzungen des Verdichtungsraums derart auftritt, dass weitere Schweißungen negativ beeinflusst werden.

Erfindungsgemäß wird die Aufgabe verfahrensgemäß im Wesentlichen dadurch gelöst, dass von den Begrenzungsflächen ausschließlich für die zweiten Begrenzungsflächen der statischen Werkzeugteile solche verwendet werden, die auf ihrer Litzen zugewandten Arbeitsfläche mit polykristallinem Diamant (PKD) belegt sind, wobei der polykristalline Diamant jeweils eine Schicht bildet, die äußere Schicht eines Trägers ist.

Überraschenderweise hat sich gezeigt, dass dann, wenn die statischen Werkzeugteile, also die Seitenbegrenzung eines in Höhe und/oder Breite verstellbaren Verdichtungsraums eine Ultraschallschweißvorrichtung mit polykristallinem Diamant belegt sind, ein Anlegieren bzw. Anhaften von Aluminium unterbleibt bzw. derart reduziert wird, dass Schweißprozesse nicht negativ beeinflusst werden, vielmehr Standzeiten der Werkzeuge erzielt werden, die beim Schweißen von Litzen üblicherweise erzielbar sind, die nicht aus Aluminium bestehen.

Ungeachtet der Tatsache, dass im Bereich der Seitenbegrenzung die größte Relativbewegung zwischen den Drähten und der angrenzenden Begrenzung herrscht, wird vermieden, dass das Aluminium, das beim Schweißen zu fließen beginnt und in eine teigige Phase übergeht, an den Seitenbegrenzungen anlegiert wird bzw. anhaftet.

Zwar ist es bekannt, Arbeitsflächen von Ultraschallschweißwerkzeugen mit einem Material geringen Ausdehnungskoeffizientens zu versehen, um hohe Standzeiten zu erzielen (EP-B-0 375 707, WO-A-02/43915). Als Materialien für die verschleißmindernde Schicht werden Keramik wie Siliziumnitridkeramik, Siliziumkarbidkeramik, Zirkonoxidkeramik, Aluminiumoxidkeramik, Dispersionskeramik wie Aluminiumoxid/Titankarbid, Hartmetall oder polykristallines Diamantmaterial genannt. Dabei soll das verschleißmindernde Material grundsätzlich auf die stark belasteten Arbeitsflächen der Sonotrode und des Ambosses aufgebracht werden, gleichwenn auch der Hinweis erfolgt, dass auch die Seitenbegrenzungen mit einem entsprechenden Material beschichtet sein können.

Das polykristalline Diamantmaterial ist vorzugsweise als Außenschicht eines Trägers aus Hartmetall ausgebildet, wobei die Schichtdicke des polykristallinen Diamants derart zu wählen ist, dass ein Hindurchdiffundieren von Aluminium ungeachtet der Vielzahl von Schweißungen ausgeschlossen ist. Daher sollte die Schichtdicke insbesondere zumindest 0,1 mm, vorzugsweise zwischen 0,2 mm und 0,7 mm, insbesondere zwischen 0,4 mm und 0,5 mm betragen. Die Dicke des Hartmetallträgers, auf den das PKD aufgebracht bzw. befestigt ist, sollte im Bereich zwischen 0,8 mm und 2,0 mm, vorzugsweise zwischen 1,0 mm und 1,2 mm liegen.

Der polykristalline Diamant ist auf einem Träger aufgebracht, der seinerseits mit den statischen Werkzeugteilen, d. h. Seitenschieber bzw. Touchierplatte verbunden wird, die den Verdichtungsraum begrenzen, in den die zu verschweißenden Leiter eingebracht werden.

Vorzugsweise sollte die Diamantschicht eine Dicke von zumindest 0,1 mm, insbesondere im Bereich zwischen 0,2 mm und 0,7 mm, und/oder Diamantkörner mit einer durchschnittlichen Diamantkorngröße zwischen 4 µm und 25 µm aufweisen, wobei das Volumen der Diamantkörner bevorzugterweise zwischen 90 Vol.-% und 95 Vol.-% der Schicht beträgt.

Dadurch, dass aufgrund des polykristallinen Diamants ein Anlegieren bzw. Anhaften an den Seitenbegrenzungen des Verdichtungsraums unterbleibt, ist der Energieeintrag zum Verschweißen der Litzen bzw. diese mit einem massiven Träger nur auf das Material Aluminium abzustellen. Insbesondere ist es nicht erforderlich, dass ein höherer Energieeintrag bzw. höhere Drucke beim Verschweißen notwendig werden, die zu beachten wären, wenn ein Anlegieren bzw. Anhaften erfolgen würde. Gleichzeitig ergibt sich durch die Wahl des Materials Aluminium der Vorteil einer Gewichtseinsparung sowie der Verwendung eines kostengünstigeren Materials im Vergleich zu Kupfer.

Die erfindungsgemäße Lehre gilt jedoch auch dann, wenn ein Mischverbund hergestellt werden soll, d. h. Aluminium und Aluminium enthaltende Litzen mit Litzen anderen Materials verschweißt werden.

Zwar besteht grundsätzlich die Möglichkeit, die verbleibenden Begrenzungsflächen von Sonotrode und Amboss auch mit polykristallinem Diamant zu belegen. Hierdurch würde jedoch insgesamt eine Verteuerung der Werkzeuge erfolgen, ohne dass sich merkliche Vorteile zeigen; denn die Anlegier- bzw. Anhaftenneigung ist im Wesentlichen im Bereich der statischen Werkzeugteile gegeben.

Ferner nimmt die Erfindung Bezug auf eine Ultraschallschweißvorrichtung zur Durchführung des zuvor genannten Verfahrens, umfassend eine Ultraschallschwingungen übertragende Sonotrode mit einem eine Schweißfläche aufweisenden Sonotrodenkopf, eine der Schweißfläche gegenüberliegende Gegenelektrode sowie seitliche Begrenzungselemente, wobei die Schweißfläche, die Begrenzungselemente sowie mittelbar oder unmittelbar die Gegenelektrode einen in Höhe und/oder Breite veränderbaren Verdichtungsraum begrenzen, und die sich dadurch auszeichnet, dass die Schweißfläche der Sonotrode einen Verlauf eines gleichschenkligen offenen Trapezes mit Bodenfläche und von Seitenschenkeln ausgehenden Seitenflächen aufweist, dass die Bodenfläche und die jeweilige Seitenfläche einen Winkel α mit 100° ≤ α ≤ 145° einschließt und dass von den den Verdichtungsraum begrenzenden Flächen ausschließlich die Begrenzungselemente in ihren den Verdichtungsraum begrenzenden Flächen polykristallinen Diamant enthalten, der jeweils eine Schicht bildet, die äußere Schicht eines Trägers ist.

Zwar ist es bekannt, Sonotroden mit Schweißflächen zu verwenden, die die Geometrie eines gleichschenkligen offenen Trapezes aufweisen (DE-U-20 2004 010 775). Allerdings wird die Geometrie dazu benutzt, um beim Verschweißen von Litzen mit Trägern U-förmiger Geometrie zu verhindern, dass Querkräfte in einem Umfang auftreten, dass die Seitenschenkel des Trägers auseinander gebogen werden. Gleichzeitig soll ein größeres Füllvolumen für die mit dem Träger zu verschweißenden Leitern zur Verfügung gestellt werden. Demgegenüber wird erfindungsgemäß eine entsprechende Schweißfläche einer Sonotrode dazu benutzt, damit zusätzlich neben der Belegung der Seitenbegrenzungsflächen des Verdichtungsraums mit PKD unterstützend erreicht wird, dass ein Anlegieren von Aluminium beim Verschweißen von Aluminium enthaltenen Materialien unterbleibt bzw. derart reduziert wird, dass Schweißungen nicht negativ beeinflusst werden.

Insbesondere ist vorgesehen, dass die den Verdichtungsraum seitlich begrenzende Fläche des Begrenzungselements Außenfläche einer aus polykristallinem Diamant bestehenden Schicht einer Dicke d mit d ≥ 0,1 mm, insbesondere mit 0,2 mm ≤ d ≤ 0,7 mm ist, die von einem Träger ausgeht, der mit dem Begrenzungselement insbesondere durch Hartlöten verbunden ist. Die Schicht ist auf dem Träger aufgebracht.

Durch die spezielle Ausbildung der Arbeitsfläche, das heißt Schweißfläche der Sonotrode, wird der Vorteil erzielt, dass die beim Verdichten und Verschweißen der Litzen auftretenden Gesamtquerkräfte in erheblichem Umfang von den die Schweißfläche der Sonotrode begrenzenden Seitenflächen aufgenommen werden, so dass zusätzlich ein Anlegieren bzw. Anhaften von Aluminium an den Seitenbegrenzungsflächen des Verdichtungsraums unterbunden wird.

Dabei sind als bevorzugte Dimensionierungen anzugeben, dass der Sonotrodenkopf eine Breite B aufweist und die Seitenschenkel über der Bodenfläche mit einer Höhe T vorstehen mit 0,1 B ≤ T ≤ 0,3 B.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißanlage,
- Fig. 2: eine Prinzipdarstellung eines Verdichtungsraums und
- Fig. 3: eine weitere Ausführungsform eines Verdichtungsraums.

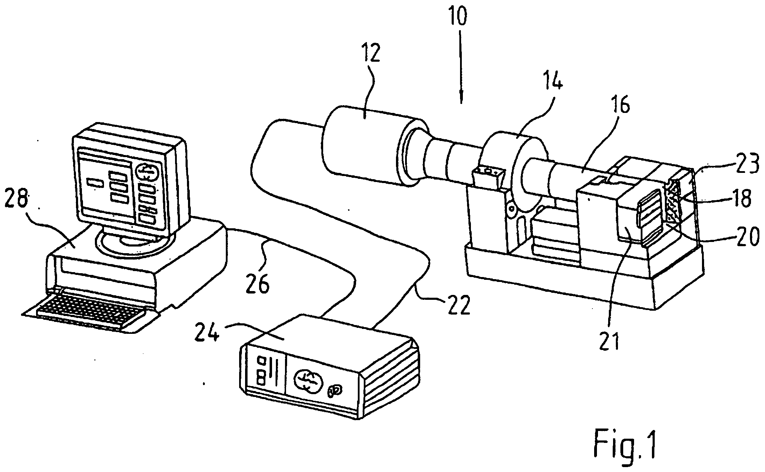

In Fig. 1 ist rein prinzipiell eine Ultraschallschweißanlage dargestellt, in der aus Aluminium bestehende oder Aluminium enthaltende Litzen, das heißt deren feine Drähte oder Adern, untereinander zu einem End- oder Durchgangsknoten oder mit einem massiven Träger wie Stanz- oder Biegeteil, z. B. einer U-Form, verschweißt werden.

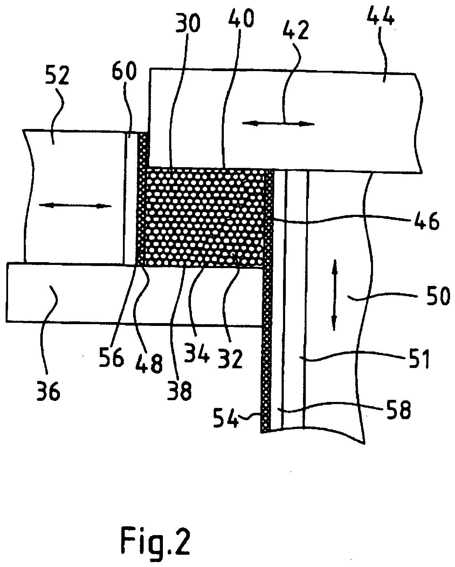

In bekannter Weise umfasst die Anlage eine Ultraschallschweißvorrichtung oder -maschine 10, die einen Konverter 12, gegebenenfalls einen Booster 14 sowie eine Sonotrode 16 aufweist. Der Sonotrode 16, das heißt deren Kopf und damit dessen Schweißfläche sind eine Gegenelektrode 20 - auch Amboss genannt - sowie Seitenschieber 21, 23 zugeordnet, um einen Verdichtungsraum zu umgeben, der in Fig. 2 rein prinzipiell in vergrößerter Darstellung wiedergegeben ist.

Sollen nach der Fig. 2 in dem Verdichtungsraum 30 aus Aluminium bestehende oder Aluminium enthaltende Litzen, die aus einzelnen dünnen Drähten oder Äderchen 32, 34 bestehen, mittels Ultraschall verschweißt werden, so werden diese in den Verdichtungsraum 30 gelegt, der von einer Arbeitsfläche 38 der Sonotrode 36, einer Arbeitsfläche 40 der gegenüberliegenden und entlang des Doppelpfeils 42 verschiebbaren Gegenelektrode (Amboss 44) sowie Arbeitsflächen 46, 48 begrenzt wird, die von einem den Amboss 44 aufnehmenden Träger 50 - auch Säule genannt - bzw. eine auf diesem angeordnete Touchierplatte 51 sowie einem Seitenschieber 52 ausgehen. Dabei zeigt die Praxis, dass ein Anlegieren der Litzen, das heißt deren dünnen Drähte und Äderchen 32, 34 an den Arbeitsflächen 46, 48 der Seitenbegrenzungen des Verdichtungsraums 30 erfolgt, also den statischen Werkzeugteilen, die den Verdichtungsraum 30 begrenzen. Ursächlich hierfür dürfte sein, dass im Bereich der Seitenbegrenzungen die größte Relativbewegung zwischen den Litzen und den Werkzeugteilen erfolgt, so dass das zu fließen beginnende bzw. in eine teigige Phase übergehende Aluminium an der Arbeitsfläche anlegiert bzw. anhaftet, so dass ordnungsgemäße Schweißungen nicht durchführbar sind.

Nach dem Stand der Technik werden daher die Litzen von einer Folie umgeben, um einen unmittelbaren Kontakt zwischen den Äderchen 32, 34 und den Arbeitsflächen 38, 40, 46, 48 auszuschließen.

Erfindungsgemäß ist demgegenüber vorgesehen, dass die Arbeitsflächen 46, 48 litzenseitig mit polykristallinem Diamant (PKD) belegt sind, wobei das PKD jeweils eine Schicht 54, 56 bildet, die äußere Schicht eines Trägers 58, 60 insbesondere aus Hartmetall ist, der vorzugsweise durch Hartlöten auf das eigentliche Werkzeugteil, das heißt den Seitenschieber 52 bzw. die Touchierplatte 51 hart aufgelötet ist. Die Schicht 54, 56 und der Träger 58, 60 bilden eine Einheit, die sodann auf die statischen Werkzeugteile 21, 23, 51, 52, 68, 70 aufgelötet wird.

Die Schicht 54, 56 sollte eine Mindestdicke von 0,1 mm, bevorzugterweise eine Dicke zwischen 0,2 mm und 0,7 mm aufweisen. Der Volumenanteil der Diamantkörner sollte zwischen 90 Vol.-% und 95 Vol.-% und/oder die Korngröße der Diamantkörner im Bereich zwischen 4 µm und 25 µm liegen, wobei ein bevorzugter Bereich zwischen 4 µm und 7 µm zu nennen ist.

Dadurch, dass die aus Aluminium bestehenden oder Aluminium enthaltenden Drähte bzw. Äderchen 32, 34 beim Schweißen im Bereich der statischen Werkzeugteile ausschließlich mit polykristallinem Diamant in Kontakt gelangen, wird überraschenderweise ein Anlegieren bzw. Anhaften des beim Schweißen teigigen bzw. fließenden Aluminiums vermieden, so dass reproduzierbare Schweißungen hoher Güte erzielbar sind, wie dies beim Verschweißen von Kupferlitzen bekannt ist.

Die erfindungsgemäße Lehre ist selbstverständlich nicht auf das Verschweißen von aus Aluminium bestehenden oder Aluminium enthaltenden Litzen untereinander beschränkt. Vielmehr ist die erfindungsgemäße Ausbildung der Arbeitsflächen 46, 48 der Seitenbegrenzungen in Form eines PKD-Belags auch dann anzuwenden, wenn Mischverbindungen hergestellt werden sollen, also z. B. aus Aluminium bestehende Litzen mit solchen z. B. aus Kupfer verschweißt werden oder eine Schweißverbindung zwischen einem massiven Träger z. B. aus Kupfer oder Aluminium oder einer Legierung von diesem mit insbesondere aus Aluminium bestehenden Litzen hergestellt werden soll.

Die Dicke der PKD-Schicht 54 bzw. 56 sollte im Bereich zwischen 0,2 mm und 0,7 mm, insbesondere im Bereich zwischen 0,4 mm und 0,5 mm liegen. Um ein Verschweißen des Trägers 58, 60 mit dem Schieber 52 bzw. der Säule 50 durchführen zu können, ohne dass Verwerfungen auftreten, sollte die Dicke des Trägers 58, 60 im Bereich zwischen 0,8 mm und 2,0 mm, insbesondere etwa 1,2 mm bis 1,0 mm liegen. Dabei wird die Verbindung zwischen dem die Schicht 54, 56 aufweisenden Träger 58, 60 und der Touchierplatte 51 bzw. den Seitenschieber 52 insbesondere mittels Hartlöten durchgeführt.

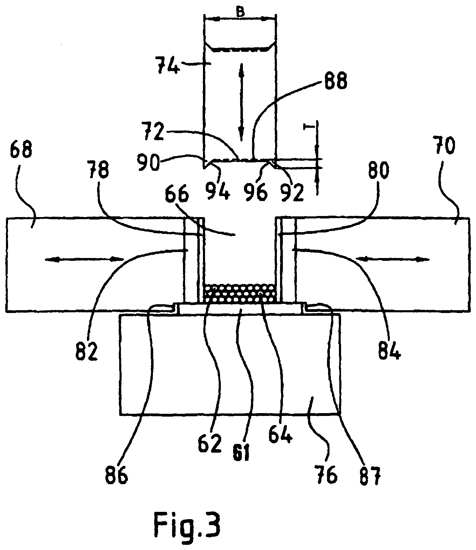

Der Fig. 3 ist eine Prinzipdarstellung eines Ausschnitts einer Ultraschallschweißvorrichtung zu entnehmen, mit der ein massiver Träger 61, der z. B. aus Kupfer bestehen kann, mit Litzen verschweißt wird, die aus Aluminium bzw. einer Aluminiumlegierung bestehen. Dargestellt sind einzelne Adern bzw. Drähte 62, 64. Der Träger 61 bildet im Ausführungsbeispiel untere Begrenzungsfläche eines Verdichtungsraums 66, der seitlich von Schiebern 68, 70 und einer Arbeits- oder Schweißfläche 72 einer Sonotrode 74 in bekannter Weise begrenzt wird. Der Träger 61 selbst ist auf einem Amboss 76 positioniert.

Entsprechend der erfindungsgemäßen Lehre weisen die Seitenschieber 68, 70 in ihrer dem Verdichtungsraum 66 zugewandten Begrenzungsfläche einen Belag 78, 80 oder Schicht aus polykristallinem Diamant (PKD) auf, der von einem Träger 82, 84 ausgeht, der seinerseits mit dem Seitenschieber 68 bzw. 70 insbesondere durch Hartlöten verbunden ist.

Um eine eindeutige Positionierung des Trägers 61 zu ermöglichen, können die Seitenschieber 68, 70 ambossseitig Ausklinkungen bzw. Ausschnitte 86, 87 aufweisen, innerhalb der die Längsränder des Trägers 61 verlaufen.

Aus der zeichnerischen Darstellung ergibt sich des Weiteren, dass die Arbeitsfläche 72 der Sonotrode 74 die Geometrie eines offenen Trapezes hat. Dabei bildet der kurze Basisschenkel die Bodenfläche 88. Die Bodenfläche 88 wird von Seitenschenkeln 90, 92 begrenzt, wobei die Innenflächen 94, 96 der Schenkel 88, 90 zur Bodenfläche 88 jeweils einen Winkel zwischen 100° und 145° beschreiben sollten. Durch die Geometrie der Schweißfläche 72, also die eines offenen Trapezes ergibt sich der Vorteil, dass die beim Schweißen auftretenden Gesamtquerkräfte von den Schenkeln 90, 92 der Arbeitsfläche 72 aufgenommen werden, wodurch zusätzlich die Neigung eines Anlegierens bzw. Anhaftens von Aluminium an den Seitenbegrenzungen des Verdichtungsraums 66 reduziert wird.

Des Weiteren sollte die Dimensionierung der Seitenschenkel 88, 90 zu dem Sonotrodenkopf derart aufeinander abgestimmt sein, dass die Höhe T der Schenkel 88, 90 beträgt 0,1 B ≤ T ≤ 0,3 B mit B = Breite des Sonotrodenkopfes, der zwischen 1,0 mm und 25,0 mm liegen kann, ohne dass hierdurch die erfindungsgemäße Lehre eingeschränkt wird. T bedeutet die Höhe über der Bodenfläche 88.

## Patentansprüche

1. Verfahren zum Reduzieren des Anlegierens und/oder Anhaftens von Aluminium oder Aluminiumlegierung beim Ultraschallverschweißen von aus Aluminium oder Aluminiumlegierung bestehenden Adern bzw. Einzeldfähten (32, 34) aufweisenden Litzen zu einem End- oder Durchgangsknoten untereinander oder mit einem aus Metall bestehenden Träger, wobei zumindest die Litzen in einen in Höhe und/oder Breite verstellbaren Verdichtungsraum (30) eingebracht werden, der in gegenüberliegenden ersten Begrenzungsflächen von Abschnitten einer Sonotrode (16, 36, 74) und eines Ambosses (20, 44, 76) oder dem auf dem Amboss angeordneten Träger (61) und in verbleibenden gegenüberliegenden zweiten Begrenzungsflächen (46, 48) von statisch wirkenden Werkzeugteilen (21, 23, 51, 52, 68, 70) begrenzt wird, wobei von den Begrenzungsflächen ausschließlich für die zweiten Begrenzungsflächen der statischen Werkzeugteile (21, 23, 51, 52, 68, 70) solche verwendet werden, die auf ihrer Litzen zugewandten Arbeitsfläche mit polykristallinem Diamant (PKD) belegt sind, wobei der poylkristalline Diamant jeweils eine Schicht (54, 56) bildet, die äußere Schicht eines Trägers (58, 60) ist.

2. Verfahren nach Anspruch 1,
**dadurch gekennzeichnet,**
**dass** neben den im Wesentlichen aus Aluminium oder Aluminiumlegierung bestehenden Adern bzw. Einzeldrähten aufweisenden ersten Litzen (32, 34) zweite Litzen aus einem anderen Material verschweißt werden.

3. Verfahren nach Anspruch 1 oder 2,
**dadurch gekennzeichnet,**
**dass** der Metallträger (58, 60) auf das statische Werkzeugteil (51, 52) befestigt wie hart aufgelötet wird.

4. Verfahren nach zumindest einem der vorhergehenden Ansprüche,
**dadurch gekennzeichnet,**
**dass** der polykristalline Diamant eine Schicht einer Dicke d mit d ≥ 0,1 mm, insbesondere 0,2 mm ≤ d ≤ 0,7 mm auf dem Träger bildet, der seinerseits vorzugsweise eine Dicke D mit 0,8 mm ≤ D ≤ 2,0 mm aufweist.

5. Verfahren nach zumindest einem der vorhergehenden Ansprüche,
**dadurch gekennzeichnet,**
**dass** die aus polykristallinem Diamant bestehende Schicht mit einer Dicke d mit d ≥ 0,1 mm, insbesondere 0,2 mm ≤ d ≤ 0,7 mm verwendet wird.

6. Verfahren nach zumindest einem der vorhergehenden Ansprüche,
**dadurch gekennzeichnet,**
**dass** als die Schicht eine mit einer Dicke d verwendet wird, die ein Hindurchdiffundieren von Aluminium verhindert.

7. Verfahren nach zumindest einem der vorhergehenden Ansprüche,
**dadurch gekennzeichnet,**
**dass** als die Schicht aus polykristallinem Diamant eine solche mit Diamantkörnern mit einer durchschnittlichen Diamantkomgröße zwischen 4 µm und 25 µm, insbesondere zwischen 4 µm und 7 µm verwendet wird.

8. Verfahren nach zumindest einem der vorhergehenden Ansprüche,
**dadurch gekennzeichnet,**
**dass** als die Schicht aus polykristallinem Diamant eine solche mit Diamantkörnern zwischen 90 Vol.-% und 95 Vol.-% verwendet wird.

9. Ultraschallschweißvorrichtung (10) zur Durchführung des Verfahrens nach Anspruch 1, umfassend eine Ultraschallschwingungen übertragende Sonotrode (16, 36, 74) mit einem eine Schweißfläche (72) aufweisenden Sonotrodenkopf, eine der Schweißfläche gegenüberliegende Gegenelektrode (76) sowie seitliche Begrenzungselemente (68, 70), wobei die Schweißfläche, die Begrenzungselemente sowie mittelbar oder unmittelbar die Gegenelektrode einen in Höhe und/oder Breite veränderbaren Verdichtungsraum (66) begrenzen,
**dadurch gekennzeichnet,**
**dass** die Schweißfläche (72) der Sonotrode (74) einen Verlauf eines gleichschenkligen offenen Trapezes mit Bodenfläche (88) und von Seitenschenkeln (90, 92) ausgehenden Seitenflächen aufweist, dass die Bodenfläche und die jeweilige Seitenfläche einen Winkel α mit 100° ≤ α ≤ 145° einschließt und dass von den den Verdichtungsraum begrenzenden Flächen ausschließlich die Begrenzungselemente (68, 70) in ihren den Verdichtungsraum (66) begrenzenden Flächen polykristallinen Diamant enthalten, der jeweils eine Schicht (54, 56) bildet, die äußere Schicht eines Trägers (58, 60) ist.

10. Ultraschallschweißvorrichtung nach Anspruch 9,
**dadurch gekennzeichnet,**
**dass** die den Verdichtungsraum (66) seitlich begrenzende Fläche des Begrenzungselements (68, 70) Außenfläche einer aus polykristallinem Diamant bestehenden Schicht einer Dicke d mit d ≥ 0,1 mm, insbesondere 0,2 mm ≤ d ≤ 0,7 mm ist, die von einem Träger (82, 84) ausgeht, der mit dem Begrenzungselement (68, 70) insbesondere durch Hartlöten verbunden ist.

11. Ultraschallschweißvorrichtung nach Anspruch 9 oder 10,
**dadurch gekennzeichnet,**
**dass** die Sonotrode (74) in ihrem die Schweißfläche (72) aufweisendem Bereich eine Breite B aufweist und dass die die Bodenfläche (88) der Schweißfläche begrenzenden Seitenschenkel (90, 92) mit einer Höhe T über der Bodenfläche vorstehen, wobei 0,1 B ≤ T ≤ 0,30 B ist.

12. Ultraschallschweißvorrichtung nach zumindest einem der Ansprüche 9 bis 11,
**dadurch gekennzeichnet,**
**dass** die aus polykristallinem Diamant bestehende Schicht (54, 56, 78, 80) Diamantkörner mit einer durchschnittlichen Diamantkomgröße zwischen 4 µm und 25 µm, insbesondere zwischen 4 µm und 7 µm aufweist.

13. Ultraschallschweißvorrichtung nach zumindest einem der Ansprüche 9 bis 12,
**dadurch gekennzeichnet,**
**dass** das Volumen der Diamantkörner in der aus polykristallinem Diamant bestehenden Schicht (54, 56, 78, 80) zwischen 90 Vol.-% und 95 Vol.-% beträgt.

## Claims

1. Process for the reduction of pick-up and/or adhesion of aluminum or aluminum alloy during ultrasonic welding of strands, which feature leads or single wires (32, 34) consisting of aluminum or aluminum alloy, to an end- or intermediate node to one another or to a carrier made of metal, whereby at least the strands are inserted into a compression chamber (30) adjustable in height and/or width, which is delimited in opposing first boundary surfaces by sections of a sonotrode (16, 36, 74) and an anvil (20, 44, 76) or a carrier (61) that is disposed on the anvil and in remaining facing second boundary surfaces (46, 48) by statically acting tool parts (21, 23, 51, 52, 68, 70),
where of the delimiting surfaces exclusively for the second limiting surfaces of the static tool parts (21, 23, 51, 52, 68, 70), those used are coated on their work surface facing the strands with polycristalline diamond (PCD), said polycristalline diamond forming in each case a layer (54, 56) which is the outer layer of a carrier (58, 60).

2. Process according to claim 1,
**characterized in**
**that**, besides the first strands (32, 34) that feature leads or single wires that consist primarily of aluminum or aluminum alloy, second strands made from another material are welded.

3. Process according to claim 1 or 2,
**characterized in**
**that** the metal carrier (58, 60) is being attached, such as hard soldered, to the static tool part (51, 52).

4. Process according to at least one of the preceding claims,
**characterized in**
**that** the polycrystalline diamond forms a layer of a thickness d with d ≥ 0.1 mm, in particular 0.2 mm ≤ d ≤ 0.7 mm, on the carrier, which in turn features preferably a thickness D with 0.8 mm ≤ D ≤ 2.0 mm.

5. Process according to at least one of the preceding claims,
**characterized in**
**that** the layer that consists of polycrystalline diamond is used with a thickness d with d≥0.1 mm, in particular 0.2 mm ≤ d ≤ 0.7 mm.

6. Process according to at least one of the preceding claims,
**characterized in**
**that** as the layer is used one with a thickness d that prevents trans-diffusion of aluminum.

7. Process according to at least one of the preceding claims,
**characterized in**
**that** as the layer of polycrystalline diamond is used one with diamond kernels of an average diamond kernel size between 4 µm and 25 µm, in particular between 4 µm and 7 µm.

8. Process according to at least one of the preceding claims,
**characterized in**
**that** as the layer of polycrystalline diamond is used one with diamond kernels between 90 vol.-% and 95 vol.-%.

9. Ultrasonic welding device (10) for the purposes of executing the process according to claim 1, comprising a sonotrode (16, 36, 74), which transmits ultrasonic oscillations, with a sonotrode head that features a welding surface (72), a counter electrode (76) that is positioned opposite the welding surface as well as lateral delimiting elements (68, 70), whereby the welding surface, the delimiting elements as well as the counter electrode, whether directly or indirectly, delimit a compression chamber (66) adjustable in height and width,
**characterized in**
**that** the welding surface (72) of the sonotrode (74) features the course of an isosceles open trapezoid with bottom surface (88) and lateral surfaces originating from lateral legs (90, 92), that the bottom surface and the respective lateral surface encompass an angle a of 100° ≤ α ≤ 145° and that of the surfaces delimiting the compression chamber exclusively the delimiting elements (68, 70) contain, in their surfaces delimiting the compression chamber (66), polycristalline diamond forming in each case a layer (54, 56) which is the outer layer of a carrier (58, 60).

10. Ultrasonic welding device according to claim 9,
**characterized in**
**that** the surface of the delimiting element (68, 70), that delimits the compression chamber (66) laterally, is outer surface of a layer of polycrystalline diamond of a thickness d with d ≥ 0.1 mm, in particular 0.2 mm ≤ d ≤ 0.7 mm, said layer emanating from a carrier (82, 84) that is connected with the delimiting element (68, 70) in particular by means of hard soldering.

11. Ultrasonic welding device according to claim 9 or 10,
**characterized in**
**that** the sonotrode (74) features, in its area that features the welding surface (72), a width B, and that the side legs (90, 92), which delimit the bottom surface (88) of the welding surface, protrude beyond the bottom surface at a height T of 0.1 B ≤ T ≤ 0.30 B.

12. Ultrasonic welding device according to at least one of claims 9 to 11,
**characterized in**
**that** the layer (54, 56, 78, 80) made of polycrystalline diamond features diamond kernels of an average diamond kernel size between 4 µm and 25 µm, in particular between 4 µm and 7 µm.

13. Ultrasonic welding device according to at least one of claims 9 to 12,
**characterized in**
**that** the volume of the diamond kernels in the layer (54, 56, 78, 80) made of polycrystalline diamond amounts to between 90 vol.-% and 95 vol.-%.

## Revendications

1. Procédé destiné à réduire le colmatage et/ou l'adhérence de l'aluminium ou d'un alliage d'aluminium lors du soudage par ultrasons de fils toronnés présentant des brins ou des conducteurs simples (32, 34) constitués d'aluminium ou d'alliage d'aluminium pour réaliser un nœud d'extrémité ou de passage entre eux ou avec un support constitué de métal, sachant qu'au moins les fils toronnés sont placés dans une chambre de compression (30) réglable en hauteur et/ou en largeur, qui est limitée dans des premières faces de délimitation opposées de sections d'une sonotrode (16, 36, 74) et d'une enclume (20, 44, 76) ou dans le support (61) placé sur l'enclume et dans les deuxièmes faces de délimitation restantes opposées (46, 48) de pièces d'outil (21, 23, 51, 52, 68, 70) agissant statiquement,
sachant que parmi les faces de délimitation ne sont utilisées pour les deux faces de délimitation des pièces d'outil statiques (21, 23, 51, 52, 68, 70) que celles qui sont recouvertes de diamant polycristallin (PCD) sur leur surface d'usinage tournée vers les fils toronnés, sachant que le diamant polycristallin forme respectivement une couche (54, 56) qui est la couche extérieure d'un support (58, 60).

2. Procédé selon la revendication 1,
**caractérisé en ce**
**qu'**en plus des premiers fils toronnés (32, 34) présentant des brins ou des conducteurs simples constitués essentiellement d'aluminium ou d'alliage d'aluminium, des deuxièmes fils toronnés constitués d'un autre matériau sont soudés.

3. Procédé selon la revendication 1 ou 2,
**caractérisé en ce**
**que** le support métallique (58, 60) est fixé, par exemple par un brasage fort, sur la pièce d'outil statique (51, 52).

4. Procédé selon au moins une des revendications précédentes,
**caractérisé en ce**
**que** le diamant polycristallin forme une couche d'une épaisseur d telle que d ≥ 0,1 mm, en particulier 0,2 mm ≤ d ≤ 0,7 mm, sur le support, qui quant à lui, présente de préférence une épaisseur D telle que 0,8 mm ≤ D ≤ 2,0 mm.

5. Procédé selon au moins une des revendications précédentes,
**caractérisé en ce**
**que** la couche constituée de diamant polycristallin est utilisée avec un épaisseur d telle que d ≥ 0,1 mm, en particulier 0,2 mm ≤ d ≤ 0,7 mm.

6. Procédé selon au moins une des revendications précédentes,
**caractérisé en ce**
**qu'**en tant que couche qui empêche une diffusion d'aluminium est utilisée une couche d'une épaisseur d.

7. Procédé selon au moins une des revendications précédentes,
**caractérisé en ce**
**qu'**en tant que couche en diamant polycristallin est utilisée une couche avec des grains de diamant ayant une grosseur moyenne comprise entre 4 µm et 25 µm, en particulier entre 4 µm et 7 µm.

8. Procédé selon au moins une des revendications précédentes,
**caractérisé en ce**
**qu'**en tant que couche en diamant polycristallin est utilisée un couche avec des grains de diamant compris entre 90 % vol. et 95 % vol.

9. Soudeuse à ultrasons (10) destinée à réaliser le procédé selon la revendication 1, comprenant une sonotrode (16, 36, 74) transmettant des vibrations ultrasonores avec une tête de sonotrode présentant une surface de soudage (72), une contrélectrode (76) opposée à la surface de soudage ainsi que des éléments de délimitation latéraux (68, 70), sachant que la surface de soudage, les éléments de délimitation, ainsi qu'indirectement ou directement la contrélectrode, délimitent une chambre de compression (66) modifiable en hauteur et/ou en largeur,
**caractérisée en ce**
**que** la surface de soudage (72) de la sonotrode (74) présente l'allure d'un trapèze isocèle ouvert avec une face de fond (88) et des faces latérales partant de côtés latéraux (90, 92), que la face de fond et les faces latérales respectives inscrivent un angle (tel que 100° (((145° et que parmi les faces délimitant la chambre de compression, seuls les éléments de délimitation (68, 70) contiennent, dans leurs faces délimitant la chambre de compression (66), du diamant polycristallin qui forme respectivement une couche (54, 56) qui est la couche extérieure d'un support (58, 60).

10. Soudeuse à ultrasons selon la revendication 9,
**caractérisé en ce**
**que** la face de l'élément de délimitation (68, 70) qui délimite latéralement la chambre de compression (66) est la face extérieure d'une couche constituée de diamant polycristallin ayant une épaisseur d telle que d ≥ 0,1 mm, en particulier 0,2 mm ≤ d ≤ 0,7 mm, et qui part d'un support (82, 84) qui est relié à l'élément de délimitation (68, 70) en particulier par brasage à haute température.

11. Soudeuse à ultrasons selon la revendication 9 ou 10,
**caractérisée en ce**
**que** dans sa zone présentant la surface de soudage (72), la sonotrode (74) a une largeur B et que les côtés latéraux (90, 92) limitant la face de fond (88) de la surface de soudage font saillie d'une hauteur T sur la face de fond, sachant que T est telle que 0,1 B ≤ T ≤ 0,30 B.

12. Soudeuse à ultrasons selon au moins une des revendications 9 à 11,
**caractérisée en ce**
**que** la couche (54, 56, 78, 80) constituée de diamant polycristallin présente des grains de diamant ayant une grosseur moyenne comprise entre 4 µm et 25 µm, en particulier entre 4 µm et 7 µm.

13. Soudeuse à ultrasons selon au moins une des revendications 9 à 12,
**caractérisée en ce**
**que** le volume des grains de diamant dans la couche (54, 56, 78, 80) constituée de diamant polycristallin est compris entre 90 % vol. et 95 % vol.
